# EUROPEAN PATENT APPLICATION

(11) **EP 4 632 094 A1**
(43) Date of publication of application: **15.10.2025**
(21) Application number: 23900246.2
(22) Date of filing: 24.08.2023
(51) Int. Cl.: C22C 38/00, C21D 1/18, C21D 9/00, C21D 9/46, C22C 18/00, C22C 18/04, C22C 38/60, C23C 2/02, C23C 2/06, C23C 2/26

(54) **HOT-STAMPED MOLDED ARTICLE**

(30) Priority: 09.12.2022 JP 2022197092
(71) Applicant: NIPPON STEEL CORPORATION, Chiyoda-ku Tokyo 100-8071 (JP)
(72) Inventor: MITSUNOBU, Takuya, Tokyo 100-8071 (JP); HAYASHIDA, Shota, Tokyo 100-8071 (JP); TAKEBAYASHI, Hiroshi, Tokyo 100-8071 (JP)
(74) Representative: Vossius & Partner Patentanwälte Rechtsanwälte mbB
(86) International application number: PCT/JP2023/030451
(87) International publication number: WO 2024/122119

(57) **Abstract**

Provided is a hot-stamp formed body comprising a steel base material and a plating layer arranged on a surface of the steel base material, wherein the plating layer has a predetermined chemical composition, a mean C concentration down to 1 µm in a depth direction from a surface of the steel base material is 0.25 mass% or less, the steel base material contains, by area ratio, martensite in 90% or more, an amount of deposition of the plating layer is 30 g/m² or more per surface, the plating layer contains a Zn-containing phase containing at least one of an η-Zn phase, Fe-Zn-based intermetallic compound phase, and Mg-Zn-based intermetallic compound phase, and the Vickers hardness is 400 HV or more.

## Description

### FIELD

The present invention relates to a hot-stamp formed body.

### BACKGROUND

In recent years, in the automobile industry, lighter weight of car bodies is being sought from the viewpoint of improving fuel economy. To achieve both lighter weight of car bodies and collision safety, making the steel sheet used in frame members, etc., higher in strength is one effective method. With this as a background, high strength steel materials are being developed.

Hot stamping (hot pressing) is known as a technique for press-forming a material, which is difficult to form, such as a high strength steel sheet. Hot stamping is a technique of hot forming which heats then forms a material to be formed. This technique heats then forms the material, and therefore at the time of forming, the steel material is soft and has good formability. Therefore, even a high strength steel material can be formed into a complex shape with a good precision. Further, it is hardened at the same time as being formed by the press dies, and therefore a formed steel material is known to have sufficient strength.

In relation to this, hot-stamp formed bodies given a Zn-containing plating are being variously studied.

For example, PTL 1 describes steel sheet containing 2.0 to 24.0 wt% of zinc, 7.1 to 12.0 wt% of silicon, optionally 1.1 to 8.0 wt% of magnesium, optionally additional elements selected from Pb, Ni, Zr, or Hf, the contents by weight of the different additional elements being lower than 0.3 wt%, and a balance of aluminum and any unavoidable impurities and residual elements and covered by a metal coating with an Al/Zn ratio of more than 2.9 and teaches that by hot-stamp forming the steel sheet, the obtained part exhibits high sacrificial corrosion prevention.

PTL 2 describes a method of production of a hardened part comprising A) a step of providing a steel sheet precoated with a metal coating comprising 2.0 to 24.0 wt% of zinc, 1.1 to 7.0 wt% of silicon, when the amount of silicon is between 1.1 to 4.0 wt%, in some cases 1.1 to 8.0 wt% of magnesium and in some cases, an additional element selected from Pb, Ni, Zr, or Hf, a content by weight of each additional element being less than 0.3 wt%, and a balance of aluminum and unavoidable impurities and residual elements, in which step, the Al/Zn ratio is more than 2.9, B) a step of cutting the coated steel sheet to obtain a blank, C) a step of heat treating the blank from 840 to 950°C in temperature to obtain completely austenite refined structures in the steel, D) a step of transporting the blank to within a press tool, E) a step of hot working the blank to obtain a part, and F) a step of cooling the part obtained at step E) to obtain refined structures comprised of martensite or martensite-bainite or comprised of at least 75% of equiaxed ferrite, 5 to 20% of martensite, and 10% or less an amount of bainite in the steel. Further, PTL 2 teaches that according to the above method of production, a solidified part free of LME is obtained.

### [CITATIONS LIST]

### [PATENT LITERATURE]

[PTL 1] Japanese Unexamined Patent Publication No. 2018-528324
[PTL 2] Japanese Unexamined Patent Publication No. 2018-527462

### SUMMARY

### [TECHNICAL PROBLEM]

For example, if using the galvanized steel sheet such as described in PTLs 1 and 2 in hot-stamp forming, after hot-stamp forming, a plating layer sometimes becomes alloyed with the back iron (steel base material) and falls in corrosion resistance. Further, a hot-stamp formed body obtained by hot-stamp forming galvanized steel sheet is then joined utilizing spot welding, etc. At this time, it is necessary to suppress liquid metal embrittlement (LME) cracking. This phenomenon is the cracking occurring due to Zn converted to a liquid phase by the weld heat penetrating the inside of the steel material along the crystal grain boundaries and causing embrittlement and the tensile stress generated due to welding acting on those locations. In relation to this, PTL 2 teaches suppression of LME occurring at the time of hot-stamp forming, but PTL 2 does not necessarily sufficiently study suppression of LME cracking at the time of spot welding after hot-stamp forming and further this from the viewpoint of realizing both suppression of the LME cracking and improvement of corrosion resistance. Further, LME cracking generally remarkably occurs in a steel material having a relatively high strength. It is known that the higher the strength of the steel material, the more the sensitivity to LME cracking tends to rise. On the other hand, in the automobile industry, etc., further reduction of weight of the steel material is also being sought. To achieve such lighter weight, a need arises to make the steel material higher in strength than before. Therefore, there is a high need for a steel material able to solve the problem of LME cracking even if raising the strength equal to or greater than that of the past, more specifically a hot-stamp formed body.

Therefore, the present invention has as its object the provision of a hot-stamp formed body high in strength and able to maintain a high corrosion resistance even after hot-stamp forming while suppressing LME cracking at the time of spot welding.

### [SOLUTION TO PROBLEM]

The inventors engaged in studies for achieving the above object and as a result discovered that, first, even if forming a plating layer containing a specific Zn-containing phase by a predetermined amount or more of deposition for application to hot-stamp forming, it is possible to maintain a sufficient corrosion resistance. In addition, the inventors discovered that, despite having a high Vickers hardness of 400 HV or more, by suitably reforming the surface layer part structure of the steel base material before hot-stamp forming so that the C concentration at the surface layer part of the steel base material after hot-stamp forming becomes relatively low, even with a plating layer formed by such an amount of plating deposition, it is possible to remarkably suppress or reduce the occurrence of LME cracking at the time of spot welding after hot-stamp forming, and thereby completed the present invention.

The present invention able to achieve the above object is as follows:
(1) A hot-stamp formed body comprising a steel base material and a plating layer arranged on a surface of the steel base material, wherein
   the plating layer has a chemical composition comprising, by mass%,
   Al: 0.5 to 30.0%,
   Mg: 0.50 to 15.00%,
   Si: 0 to 2.0%, and
   Fe: 15.0 to 70.0%,
   further comprising at least one of
   Ni: 0 to 1.000%,
   Ca: 0 to 3.0%,
   Sb: 0 to 0.500%,
   Pb: 0 to 0.500%,
   Cu: 0 to 1.000%,
   Sn: 0 to 1.000%,
   Ti: 0 to 1.000%,
   Cr: 0 to 1.000%,
   Nb: 0 to 1.000%,
   Zr: 0 to 1.000%,
   Mn: 0 to 1.000%,
   Mo: 0 to 1.000%,
   Ag: 0 to 1.000%,
   Li: 0 to 1.000%,
   La: 0 to 0.500%,
   Ce: 0 to 0.500%,
   B: 0 to 0.500%,
   Y: 0 to 0.500%,
   Sr: 0 to 0.500%,
   In: 0 to 0.500%,
   Co: 0 to 0.500%,
   Bi: 0 to 0.500%,
   P: 0 to 0.500%, and
   W: 0 to 0.500% in a total of 5.000% or less, and
   a balance: Zn and impurities,
   a mean C concentration down to 1 µm in a depth direction from a surface of the steel base material is 0.25 mass% or less,
   the steel base material comprises, by area ratio, martensite in 90% or more,
   an amount of deposition of the plating layer is 30 g/m² or more per surface,
   the plating layer includes a Zn-containing phase containing at least one of an η-Zn phase, Fe-Zn-based intermetallic compound phase, and Mg-Zn-based intermetallic compound phase, and
   the Vickers hardness is 400 HV or more.
(2) The hot-stamp formed body according to (1), wherein the mean C concentration is 0.18 mass% or less.
(3) The hot-stamp formed body according to (2), wherein the mean C concentration is 0.10 mass% or less.
(4) The hot-stamp formed body according to any one of (1) to (3), wherein the chemical composition contains, by mass%, Al: 6.0 to30.0% and Mg: 3.00 to15.00% and the Zn-containing phase includes at least one of an η-Zn phase and Fe-Zn-based intermetallic compound phase.
(5) The hot-stamp formed body according to any one of (1) to (4), wherein the chemical composition contains, by mass%, Al: 20.0 to 30.0% and Mg: 5.00 to 15.00% and the Zn-containing phase includes an Mg-Zn-based intermetallic compound phase.

### [ADVANTAGEOUS EFFECTS OF INVENTION]

According to the present invention, it is possible to provide a hot-stamp formed body high in strength and able to maintain a high corrosion resistance even after hot-stamp forming while suppressing LME cracking at the time of spot welding.

### DESCRIPTION OF EMBODIMENTS

### <Hot-Stamp Formed Body>

The hot-stamp formed body according to an embodiment of the present invention comprises a steel base material and a plating layer arranged on a surface of the steel base material, wherein
the plating layer has a chemical composition comprising, by mass%,
Al: 0.5 to 30.0%,
Mg: 0.50 to 15.00%,
Si: 0 to 2.0%, and
Fe: 15.0 to 70.0%,
further comprising at least one of
Ni: 0 to 1.000%,
Ca: 0 to 3.0%,
Sb: 0 to 0.500%,
Pb: 0 to 0.500%,
Cu: 0 to 1.000%,
Sn: 0 to 1.000%,
Ti: 0 to 1.000%,
Cr: 0 to 1.000%,
Nb: 0 to 1.000%,
Zr: 0 to 1.000%,
Mn: 0 to 1.000%,
Mo: 0 to 1.000%,
Ag: 0 to 1.000%,
Li: 0 to 1.000%,
La: 0 to 0.500%,
Ce: 0 to 0.500%,
B: 0 to 0.500%,
Y: 0 to 0.500%,
Sr: 0 to 0.500%,
In: 0 to 0.500%,
Co: 0 to 0.500%,
Bi: 0 to 0.500%,
P: 0 to 0.500%, and
W: 0 to 0.500% in a total of 5.000% or less, and
a balance: Zn and impurities,
a mean C concentration down to 1 µm in a depth direction from a surface of the steel base material is 0.25 mass% or less,
the steel base material comprises, by area ratio, martensite in 90% or more,
an amount of deposition of the plating layer is 30 g/m² or more per surface,
the plating layer includes a Zn-containing phase containing at least one of an η-Zn phase, Fe-Zn-based intermetallic compound phase, and Mg-Zn-based intermetallic compound phase, and
the Vickers hardness is 400 HV or more.

As explained earlier, a hot-stamp formed body obtained by hot-stamp forming galvanized steel sheet has to be kept down in liquid metal embrittlement (LME) cracking when joined by spot welding. The reason is not necessarily clear, but in research by the inventors, etc., it has been learned that the carbon contained in steel sheet is an element which promotes such LME cracking. Therefore, it is thought that by reducing the concentration of carbon at the steel sheet surface layer part where LME cracking occurs by, for example, decarburization, etc., it would be possible to suppress or reduce the occurrence of LME cracking. However, in actuality, if used for hot-stamp forming, the effect of suppression of LME by such lowering of the carbon concentration at the steel sheet surface layer part is limited and sometimes is not necessarily satisfactory.

The inventors engaged in various studies and as a result discovered that from the viewpoint of improving the LME resistance, even if reducing the carbon concentration at the surface layer part of a steel base material before hot-stamp forming by decarburization, etc., at the time of the high temperature heating in the hot-stamp forming, the carbon contained in the bulk of the steel base material diffuses to the surface layer part and that due to such recarburization of the surface layer part, the effect of suppression of LME by the initial lowering of the carbon concentration of the surface layer part is lost or is reduced. Therefore, the inventors engaged in further studies and discovered that by creating structures able to suppress such recarburization at the surface layer part of the steel base material before hot-stamp forming, even if including the Zn-containing plating layer in a predetermined amount of deposition for maintaining a sufficient corrosion resistance, it is possible to sufficiently realize the effect of suppression of LME by the initial lowering of the carbon concentration of the surface layer part and reliably suppress or reduce the occurrence of LME cracking at the time of spot welding after the hot-stamp forming. More specifically, as explained later in detail in relation to a method of production of a hot-stamp formed body, the inventors discovered that by making the amount of deposition of the plating layer containing a specific Zn-containing phase, more specifically a Zn-containing phase containing at least one of an η-Zn phase, Fe-Zn-based intermetallic compound phase, and Mg-Zn-based intermetallic compound phase 30 g/m² or more per surface, it is possible to maintain sufficient corrosion resistance even when used for hot-stamp forming and by forming at the surface layer part of the steel base material a structure with a relatively small amount of pearlite and a reduced amount of coarse pearlite, when used for hot-stamp forming, it is possible to suppress the mean C concentration down to 1 µm in the depth direction from the surface of the steel base material to 0.25 mass% or less and, in relation to this, reliably suppress or reduce LME cracking at the time of spot welding after hot-stamp forming.

While not intending to be bound to any specific theory, probably, when obtaining a hot-stamp formed body according to an embodiment of the present invention by hot-stamp forming, the structure at the surface layer part of the steel base material may act in the following way to suppress or reduce the carbon contained in the bulk of the steel base material from diffusing to the surface layer part causing recarburization at the time of the high temperature heating in the hot-stamp forming. Explained in more detail, if the carbon concentration at the surface layer part of the steel base material is reduced by decarburization, etc., due in part to this lowering of the carbon concentration, the amount of pearlite formed in the microstructure at the surface layer part of the steel base material becomes relatively smaller. By forming such a region with a relatively smaller amount of pearlite at the surface layer part of the steel base material, it becomes possible to sufficiently obtain the effect of suppression of LME by the lowering of the carbon concentration. However, with just reduction of the amount of pearlite, if the pearlite precipitates along the grain boundaries, at the time of the high temperature heating in the hot-stamp forming, probably the pearlite transforms to austenite and routes for diffusion of carbon (i.e., routes for recarburization by the carbon) are formed by the austenite along the grain boundaries. At the time of the high temperature heating in the hot-stamp forming, the carbon in the bulk wants to diffuse to the surface side due to the gradient in concentration between the high carbon concentration of the bulk in the steel base material and the low carbon concentration at the surface side. At that time, if there are the above such routes for recarburization by the carbon due to the austenite along the grain boundaries, the carbon in the bulk will diffuse to the surface side through the recarburization routes and recarburization to the surface layer part will be promoted. As a result, it will be no longer possible to sufficiently obtain the effect of suppression of LME by the initial lowering of the carbon concentration of the surface layer part. As opposed to this, according to an embodiment of the present invention, by further reducing the amount of coarse pearlite in the region of the surface layer part with the relatively small amount of pearlite, even at the time of the high temperature heating in the hot-stamp forming, it is possible to make the austenite transformed from the pearlite disperse on the grain boundaries and thereby reliably cut off the routes for recarburization due to the austenite.

Explained more specifically, if pearlite transforms to austenite at the time of the high temperature heating in the hot-stamp forming, a dual phase structure of ferrite and austenite is formed. In such a case, the austenite present at the interface of the different phases of the ferrite and austenite will extend to the surface side of the steel base material causing the formation of routes for recarburization of carbon and as a result diffusion of carbon from the bulk of the steel base material to the surface side will be promoted. In relation to this, when obtaining the hot-stamp formed body according to an embodiment of the present invention by hot-stamp forming, it becomes important to reduce the amount of pearlite at the surface layer part of the steel base material and to reduce the amount of coarse pearlite at the surface layer part. By such a surface layer part structure, even at the time of the high temperature heating in the hot-stamp forming, it is possible to reduce the amount of austenite transformed from pearlite and further possible to make the austenite be present dispersed on the grain boundaries, therefore it becomes possible to reliably cut off the routes for recarburization of carbon due to the austenite. As a result, in the finally obtained hot-stamp formed body, it is possible to suppress the mean C concentration down to 1 µm in the depth direction from the surface of the steel base material to 0.25 mass% or less. In particular, if hot-stamp forming plated steel sheet given an Zn-based plating, at the time of the high temperature heating in the hot-stamp forming, due to the mutual diffusion of the Fe in the steel base material and the plating layer, the plating layer and Fe become alloyed. On the other hand, the C in the steel base material is not contained in the plating layer, therefore the C is relatively concentrated near the surface of the steel base material compared with the Fe. For this reason, even if the surface layer part of the steel base material were lowered in carbon concentration by the decarburization, etc., before the hot-stamp forming, after the hot-stamp forming, sometimes the C concentration at the surface layer part of the steel base material will become far higher than the C concentration at the bulk. As opposed to this, according to an embodiment of the present invention, the diffusion of C from the bulk to the surface layer part is suppressed by cutting off the routes for recarburization as explained above, therefore compared with the case of conventional plated steel sheet, it is possible to remarkably suppress or reduce the concentration of C near the surface of the steel base material, more specifically becomes possible to suppress the mean C concentration from the surface of the steel base material down to 1 µm in the depth direction to 0.25 mass% or less. Therefore, according to an embodiment of the present invention, despite being provided with a Zn-containing plating layer in an amount sufficient for maintaining corrosion resistance and therefore the conditions being such that LME relatively easily occurs, by remarkably suppressing the recarburization at the time of the high temperature heating in the hot-stamp forming, it becomes possible to sufficiently obtain the effect of suppression of LME by the initial lowering of the carbon concentration at the steel base material surface layer part and reliably suppress or reduce the occurrence of LME cracking at the time of subsequent spot welding. The fact that in a hot-stamp formed body given a Zn-containing plating layer, by suitably modifying the surface layer part structure of the steel base material before hot-stamp forming, it is possible to suppress or reduce the occurrence of LME cracking as explained above was first made clear this time by the inventors. Therefore the hot-stamp formed body according to an embodiment of the present invention is particularly useful in use in the automobile industry where spot welding is relatively often used.

Below, the hot-stamp formed body according to an embodiment of the present invention will be explained in more detail. In the following explanation, the "%" of the units of contents of the elements, unless otherwise indicated, means "mass%". Further, in this Description, the "to" showing a numerical range, unless otherwise indicated, is used in the sense of the numerical values described before and after the same being included as the lower limit value and the upper limit value.

### [Plating Layer]

According to an embodiment of the present invention, the plating layer is arranged at a surface of the steel base material, for example, is arranged at least at one surface, preferably both surfaces, of the steel base material. Here, the expression "arranged at a surface of the steel base material" not only covers the case where the plating layer is directly arranged at a surface of the steel base material, but also the case where the plating layer is indirectly arranged at a surface of the steel base material, for example, the case including a solid solution layer explained later between the steel base material and the plating layer. The plating layer has the following chemical composition.

### [Al: 0.5 to 30.0%]

Al is an element effective for improving the corrosion resistance of the plating layer. To sufficiently obtain such an effect, the Al content is 0.5% or more. The Al content may also be 0.7% or more, 1.0% or more, 3.0% or more, 5.0% or more, 7.0% or more, 10.0% or more, or 15.0% or more. On the other hand, if excessively containing Al, the amount of Zn required for imparting sacrificial corrosion resistance falls. Therefore, the Al content is 30.0% or less. The Al content may also be 27.0% or less, 25.0% or less, 22.0% or less, or 20.0% or less.

### [Mg: 0.50 to 15.00%]

Mg is an element effective for improving the corrosion resistance of the plating layer. To sufficiently obtain such an effect, the Mg content is 0.50% or more. The Mg content may also be 0.51% or more, 0.52% or more, 0.53% or more, 0.55% or more, 0.60% or more, 0.80% or more, 1.00% or more, 1.50% or more, 2.00% or more, or 3.00% or more. On the other hand, if excessively containing Mg, due to an excessive sacrificial corrosion prevention action, sometimes paint blisters and rust streaks occurs. Therefore, the Mg content is 15.00% or less. The Mg content may also be 12.00% or less, 10.00% or less, 9.00% or less, 8.00% or less, 7.00% or less, 6.00% or less, or 5.00% or less.

### [Si: 0 to 2.0%]

Si is an element effective for improving the corrosion resistance of the plating layer. The Si content may also be 0%, but in accordance with need, Si may also be contained in the plating layer in an amount of 0.01 % or more, 0.05% or more, 0.1% or more, 0.2% or more, 0.4% or more, or 0.6% or more. On the other hand, from the viewpoint of improvement of the plating adhesion of the plating layer, the Si content may also be 2.0% or less. The Si content may also be 1.8% or less, 1.5% or less, 1.2% or less, 1.0% or less, or 0.8% or less.

### [Fe: 15.0 to 70.0%]

If heating a plated steel sheet at the time of hot-stamp forming, the Fe from the steel base material diffuses into the plating layer and becomes alloyed with the Zn, etc., therefore the plating layer always contains Fe. Therefore, the Fe content is 15.0% or more and, for example, may also be 20.0% or more, 25.0% or more, 30.0% or more, 35.0% or more, 40.0% or more, 45.0% or more, or 50.0% or more. On the other hand, according to an embodiment of the present invention, as explained later in detail relating to the method of production of a hot-stamp formed body, by suitably reforming the surface layer structures of the steel base material before hot-stamp forming, the reason is not necessarily clear, but it is probably possible to delay the alloying of the Zn in the plating layer, etc., and the Fe in the steel base material. Therefore, according to an embodiment of the present invention, the Fe content in the plating layer can be suppressed to as much as 70.0% or less. In relation to this, by controlling the amount of deposition of the plating layer to 30 g/m² or more per surface, it is possible to form a relatively large amount of a plating layer where alloying does not sufficiently proceed. Due to the presence of such a plating layer and further the presence of a specific Zn-containing phase in the plating layer, more specifically at least one of the η-Zn phase, Fe-Zn-based intermetallic compound phase, and Mg-Zn-based intermetallic compound phase, it becomes possible to maintain a sufficient corrosion resistance. From the viewpoint of improvement of the corrosion resistance, the lower the Fe content, the more preferable. For example, it may also be 67.0% or less, 65.0% or less, 62.0% or less, 60.0% or less, 57.0% or less, or 55.0% or less.

Furthermore, the plating layer may optionally contain at least one of Ni: 0 to 1.000%, Ca: 0 to 3.0%, Sb: 0 to 0.500%, Pb: 0 to 0.500%, Cu: 0 to 1.000%, Sn: 0 to 1.000%, Ti: 0 to 1.000%, Cr: 0 to 1.000%, Nb: 0 to 1.000%, Zr: 0 to 1.000%, Mn: 0 to 1.000%, Mo: 0 to 1.000%, Ag: 0 to 1.000%, Li: 0 to 1.000%, La: 0 to 0.500%, Ce: 0 to 0.500%, B: 0 to 0.500%, Y: 0 to 0.500%, Sr: 0 to 0.500%, In: 0 to 0.500%, Co: 0 to 0.500%, Bi: 0 to 0.500%, P: 0 to 0.500%, and W: 0 to 0.500%. These optional elements are not particularly limited, but in total are preferably 5.000% or less. The optional elements may also total 4.500% or less, 4.000% or less, 3.500% or less, 3.000% or less, 2.500% or less, 2.000% or less, 1.500% or less, or 1.000% or less. Below, these optional elements will be explained in detail.

### [Ni: 0 to Less than 1.000%]

Ni is an element effective for improving the corrosion resistance of the plating layer. The Ni content may also be 0%, but to obtain such an effect, the Ni content is preferably 0.0001% or more. The Ni content may also be 0.0004% or more, 0.001% or more, 0.005% or more, 0.010% or more, or 0.020% or more. The upper limit is not particularly prescribed, but from the viewpoint of the production costs, etc., the Ni content is 1.000% or less, for example, may also be 0.980% or less, 0.950% or less, 0.900% or less, 0.700% or less, 0.500% or less, 0.400% or less, 0.300% or less, or 0.100% or less.

### [Ca: 0 to 3.0%]

Ca is an element effective for securing the wettability of the plating bath. The Ca content may also be 0%, but to obtain such an effect, the Ca content is preferably 0.01% or more. The Ca content may also be 0.05% or more, 0.1% or more, 0.5% or more, or 1.0% or more. On the other hand, if excessively containing Ca, a large amount of hard intermetallic compounds is formed in the plating layer, the plating layer becomes brittle, and sometimes the adhesion with the steel sheet is lowered. Therefore, the Ca content is preferably 3.0% or less. The Ca content may also be 2.5% or less, 2.0% or less, or 1.5% or less.

### [Sb: 0 to 0.500%, Pb: 0 to 0.500%, Cu: 0 to 1.000%, Sn: 0 to 1.000%, Ti: 0 to 1.000%, Cr: 0 to 1.000%, Nb: 0 to 1.000%, Zr: 0 to 1.000%, Mn: 0 to 1.000%, Mo: 0 to 1.000%, Ag: 0 to 1.000%, Li: 0 to 1.000%, La: 0 to 0.500%, Ce: 0 to 0.500%, B: 0 to 0.500%, Y: 0 to 0.500%, Sr: 0 to 0.500%, In: 0 to 0.500%, Co: 0 to 0.500%, Bi: 0 to 0.500%, P: 0 to 0.500%, and W: 0 to 0.500%]

Sb, Pb, Cu, Sn, Ti, Cr, Nb, Zr, Mn, Mo, Ag, Li, La, Ce, B, Y, Sr, In, Co, Bi, P, and W need not be included in the plating layer, but can be present in the plating layer in an amount of 0.0001% or more, 0.001% or more, or 0.01% or more. These elements do not detrimentally affect the performance of a hot-stamp formed body if within predetermined ranges of content. However, if the contents of the elements are excessive, they sometimes cause the corrosion resistance to fall. Therefore, the contents of Sb, Pb, La, Ce, B, Y, Sr, In, Co, Bi, P, and W are preferably 0.500% or less, for example, may be 0.300% or less, 0.100% or less, or 0.050% or less. Similarly, the contents of Cu, Sn, Ti, Cr, Nb, Zr, Mn, Mo, Ag, and Li are preferably 1.000% or less, for example may be 0.800% or less, 0.500% or less, or 0.100% or less.

In the plating layer, the balance aside from the above elements is comprised of Zn, and impurities. The "impurities" in the plating layer are constituents, etc., entering the due to the raw materials first and foremost and other various factors in the production process when producing the plating layer. The Zn content of the balance is not particularly limited, but for example may be 5.0% or more, 10.0% or more, 15.0% or more, or 20.0% or more.

### [Measurement of Chemical Composition of Plating Layer]

The chemical composition of the plating layer is determined by dissolving only the plating layer in an acidic aqueous solution and chemically analyzing the same. That is, the chemical composition of the plating layer is obtained by dissolving the plating layer by an acid aqueous solution containing an inhibitor suppressing the dissolution of steel, specifically a room temperature acidic aqueous solution comprised of 10% of hydrochloric acid to which 1% of Hibiron (A-6) (made by Sugimura Chemical Industrial Co., Ltd.) is added and analyzing the obtained acid aqueous solution by ICP (inductively coupled plasma spectrometry).

The plating layer may be any plating layer having the above chemical composition and containing the following Zn-containing phase. It is not particularly limited, but, for example, it may be a hot dip coated layer, alloyed hot dip coated layer, etc.

### [Zn-Containing Phase]

In an embodiment of the present invention, the plating layer contains a Zn-containing phase including at least one of an η-Zn phase, Fe-Zn-based intermetallic compound phase, and Mg-Zn-based intermetallic compound phase. According to an embodiment of the present invention, as explained later in detail relating to the method of production of a hot-stamp formed body, by suitably modifying the surface layer part structure of the steel base material before hot-stamp forming, it is believed it is possible to delay the alloying of the Zn, etc., in the plating layer and the Fe in the steel base material and in addition, due to the Al oxide coating formed on the surface of the plating layer, remarkably suppress or reduce the vaporization of the Zn and/or Mg in the plating layer even at the time of high temperature heating in hot-stamp forming. As a result, it is possible to include in the plating layer after hot-stamp forming, as a Zn-containing phase, at least one of an η-Zn phase, Fe-Zn-based intermetallic compound phase, and Mg-Zn-based intermetallic compound phase excellent in corrosion resistance. In the present invention, the "η-Zn phase" refers to a phase mainly comprised of Zn but containing Fe and other elements in a solid solution state, more specifically refers to a phase having a Zn concentration of 97 at% or more, an Fe concentration of 3 at% or less, and other elements of 3 at% or less measured by a scan electron microscope with an electron probe microanalyzer (SEM-EPMA). An Fe-Zn-based intermetallic compound phase may for example be at least one of a δ-FeZn_{1 0} phase and Γ-Fe₃ Zn_{1 0} phase. For example, by the Zn-containing phase in the plating layer containing at least one of an η-Zn phase and Fe-Zn-based intermetallic compound phase, it is possible to improve the corrosion resistance of the hot-stamp formed body. On the other hand, the Mg-Zn-based intermetallic compound phase may be at least one of for example an MgZn₂ phase, Mg₂ Zn₃ phase, MgZn phase, Mg₂ Zn_{1 1} phase, and Mg_{2 1} Zn_{2 5} phase. The Mg-Zn-based intermetallic compound phase has a corrosion resistance higher compared with the η-Zn phase and Fe-Zn-based intermetallic compound phase. For this reason, in a preferred embodiment of the present invention, it is possible to further improve the corrosion resistance by the Zn-containing phase in the plating layer including an Mg-Zn-based intermetallic compound phase in addition to or in place of at least one of the η-Zn phase and Fe-Zn-based intermetallic compound phase. In a more preferred embodiment of the present invention, the Zn-containing phase in the plating layer is comprised of only the Mg-Zn-based intermetallic compound phase. By configuring the Zn-containing phase from only the Mg-Zn-based intermetallic compound phase having higher corrosion resistance, it becomes possible to improve the corrosion resistance of the plating layer more remarkably. The η-Zn phase, Fe-Zn-based intermetallic compound phase, and Mg-Zn-based intermetallic compound phase, as explained later in detail in relation to the method of production, can form an Al oxide coating at the surface of the plating layer to suppress or reduce the vaporization of Zn and/or Mg at the time of the high temperature heating in the hot-stamp forming and, in addition, suitably control the chemical composition of the plating layer to produce the plating layer by the desired ratio. For example, by the chemical composition of the plating layer containing, by mass%, Al: 6.0 to 30.0% and Mg: 3.00 to 15.00%, it is possible to make at least one of the η-Zn phase and Fe-Zn-based intermetallic compound phase form in the plating layer as the Zn-containing phase. Similarly, by the chemical composition of the plating layer containing, by mass%, Al: 20.0 to 30.0% and Mg: 5.00 to 15.00%, it becomes possible to make an Mg-Zn-based intermetallic compound phase in the plating layer as the Zn-containing phase, in particular to make only the Mg-Zn-based intermetallic compound phase form.

### [Identification of Zn-Containing Phase]

The Zn-containing phase is identified by the X-ray diffraction method (XRD). Specifically, a Cu tube is used as a source of generation of the X-rays and the surface of the plating layer is measured by XRD. If a peak is present within a range of 2θ=42.9 to 43.6°, it is judged that the Zn-containing phase in the plating layer is an η-Zn phase. Regarding an Fe-Zn-based intermetallic compound phase and Mg-Zn-based intermetallic compound phase, if a peak is present in the range of ±0.3° from the diffraction peaks of the highest intensities in the ICDD card, it is judged that the plating layer of the Zn-containing phase contains an Fe-Zn-based intermetallic compound phase and/or Mg-Zn-based intermetallic compound phase.

### [Amount of Deposition of Plating Layer: 30 g/m² or More Per Surface]

In the hot-stamp formed body according to an embodiment of the present invention, the amount of deposition of the plating layer is 30 g/m² or more per surface. In general, sometimes the plating layer becomes alloyed with the steel base material at the time of the high temperature heating in the hot-stamp forming and the corrosion resistance falls. However, according to an embodiment of the present invention, while the reason is not necessarily clear, it is probably possible to slow the alloying of the plating layer and the steel base material due to the surface layer part structure of the steel base material suitably modified before the hot-stamp forming, i.e., the surface layer part structure with the relatively small amount of pearlite and the reduced amount of coarse pearlite. Therefore, by controlling the amount of deposition of the plating layer to 30 g/m² or more per surface, it is possible to establish a relatively large amount of a plating layer present not sufficiently progressed in alloying after hot-stamp forming and probably possible to maintain sufficient corrosion resistance due to the presence of such a plating layer, further the presence of a specific Zn-containing phase in the plating layer, more specifically at least one of an η-Zn phase, Fe-Zn-based intermetallic compound phase, and Mg-Zn-based intermetallic compound phase. On the other hand, if the amount of deposition of the plating layer is small, the effect relating to the slowing of alloying such as explained above cannot be sufficiently obtained and sometimes the corrosion resistance after hot-stamp forming falls. From the viewpoint of improvement of the corrosion resistance, the amount of deposition of the plating layer is, per surface, preferably 30 g/m² or more or 40 g/m² or more, more preferably 50 g/m² or more, still more preferably 60 g/m² or more, most preferably 80 g/m² or more. The upper limit is not particularly prescribed, but the amount of deposition of the plating layer may, for example, be 200 g/m² or less, 190 g/m² or less, 180 g/m² or less, or 170 g/m² or less.

### [Measurement of Amount of Plating Deposition]

The amount of deposition of the plating layer is determined by dissolving only the plating layer by an acidic aqueous solution. That is, a 30 mm×30 mm sample is taken from the hot-stamp formed body, then the plating layer is dissolved by an acid aqueous solution containing an inhibitor suppressing the dissolution of steel, specifically a room temperature acidic aqueous solution comprised of 10% of hydrochloric acid to which 1% of Hibiron (A-6) (made by Sugimura Chemical Industrial Co., Ltd.) is added. The amount of deposition of the plating layer is determined from the change in weight of the sample before and after dissolving the plating layer.

### [Mean C Concentration From Surface of Steel Base Material Down to 1 µm in Depth Direction: 0.25 Mass% or Less]

In the hot-stamp formed body according to an embodiment of the present invention, the mean C concentration down to 1 µm in the depth direction from the surface of the steel base material is 0.25 mass% or less. As explained in detail later in relation to the method of production of the hot-stamp formed body, due to the structure relating to lowering the carbon concentration of the steel base material surface layer part before hot-stamp forming, i.e., the surface layer part structure where the amount of pearlite is relatively small and amount of coarse pearlite is reduced, recarburization at the time of the high temperature heating in the hot-stamp forming is remarkably suppressed. In relation to this, at the finally obtained hot-stamp formed body, the mean C concentration down to 1 µm in the depth direction from the surface of the steel base material is reduced to 0.25 mass% or less. As a result, the effect of suppression of LME by the initial lowering of the carbon concentration of the steel base material surface layer part can be sufficiently obtained and the occurrence of LME cracking at the time of spot welding after hot-stamp forming can be remarkably suppressed or reduced. Therefore, from the viewpoint of improvement of the LME resistance at the time of spot welding after hot-stamp forming, the lower the mean C concentration down to 1 µm in the depth direction from the surface of the steel base material, the more preferable. For example, it may be 0.22 mass% or less, 0.20 mass% or less, 0.18 mass% or less, 0.15 mass% or less, 0.12 mass% or less, 0.10 mass% or less, 0.08 mass% or less, or 0.06 mass% or less. The lower limit is not particularly prescribed, but, for example, the mean C concentration down to 1 µm in the depth direction from the surface of the steel base material may also be 0.001 mass% or more, 0.005 mass% or more, or 0.01 mass% or more.

### [Measurement of Mean C Concentration Down to 1 µm in Depth Direction From Surface of Steel Base Material]

The mean C concentration down to 1 µm in the depth direction from the surface of the steel base material is determined in the following way using high frequency glow discharge spectrometry (GDS). Specifically, the method is used of rendering the surface of the hot-stamp formed body an Ar atmosphere, applying voltage to generate glow plasma, and in that state sputtering the surface of the hot-stamp formed body while analyzing it in the depth direction. Further, the elements contained in the material are identified from the emission spectral wavelengths unique to the elements generated by excitation of atoms in the glow plasma and the emission intensities of the identified elements are estimated. Depth direction data can be estimated from the sputter time. Specifically, by using standard samples in advance to find the relationship between the sputter time and the sputter depth, it is possible to convert the sputter time to the sputter depth. Therefore, the sputter depth converted from the sputter time can be defined as the depth from the surface of the material. The obtained emission intensities are converted to mass% by creating calibration curves. When measuring the hot-stamp formed body by GDS in this way, the position in the depth direction where the Zn concentration becomes 0.1% or less is determined as the surface of the steel base material, and the mean C concentration at the region down to 1 µm in the depth direction from the surface is determined as "the mean C concentration down to 1 µm in the depth direction from the surface of the steel base material".

As explained above, if hot-stamp forming plated steel sheet given a conventional Zn-based plating, at the time of the high temperature heating in the hot-stamp forming, the Fe in the steel base material diffuses to the plating layer while the C in the steel base material does not diffuse to the plating layer, therefore the C is concentrated relative to the Fe near the surface of the steel base material. For this reason, even if the surface layer part of the steel base material were lowered in carbon concentration by decarburization, etc., before the hot-stamp forming, after the hot-stamp forming, sometimes the C concentration at the surface layer part of the steel base material will become far higher than the C concentration at the bulk. However, according to an embodiment of the present invention, diffusion of C from the bulk to the surface layer part is inhibited by suppression of recarburization, therefore compared with conventional plated steel sheet, it is possible to remarkably suppress or reduce the concentration of C near the surface of the steel base material. From the viewpoint of improvement of the LME resistance, the mean C concentration from the surface of the steel base material down to 1 µm in the depth direction is preferably equal to or lower than the C content of the steel base material. More specifically, the mean C concentration from the surface of the steel base material down to 1 µm in the depth direction is less than 1.10 times the C content of the steel base material, for example, may be 1.05 times it or less, 1.00 time or less, 0.90 time or less, 0.80 time or less, 0.70 time or less, 0.60 time or less, or 0.50 time or less. The lower limit is not particularly limited, but, for example, the mean C concentration down to 1 µm in the depth direction from the surface of the steel base material may also be 0.05 time or more of the C content of the steel base material, 0.10 time or more, or 0.15 time or more. In the present invention, the "C content of the steel base material" means the value measured by ICP-AES (inductively coupled plasma-atomic emission spectrometry) for chips based on JIS G 1201: 2014 using a test piece obtained from near the 1/2 position of thickness of the steel base material.

### [Solid Solution Layer]

In an embodiment of the present invention, the hot-stamp formed body may further contain a solid solution layer between the steel base material and the plating layer. Depending on the plating composition before hot-stamp forming or the hot stamping conditions, the Fe diffused from the steel base material to the plating layer and the Al and/or Zn in the plating layer dissolve and after the hot-stamp forming, a solid solution layer containing these dissolved elements is formed between the steel base material and plating layer. Therefore, if the hot-stamp formed body further includes a solid solution layer, the solid solution layer contains Fe and one or both of Al and Zn. More specifically, the solid solution layer contains an Fe-Al solid solution layer, Fe-Zn solid solution layer, and/or Fe-Al-Zn solid solution layer.

The presence of a solid solution layer can be confirmed in the following way. First, the plating layer is dissolved by an acid aqueous solution containing an inhibitor suppressing the dissolution of steel, specifically a room temperature acidic aqueous solution comprised of 10% of hydrochloric acid to which 1% of Hibiron (A-6) (made by Sugimura Chemical Industrial Co., Ltd.) is added. Next, using high frequency glow discharge spectrometry (GDS), the surface of the hot-stamp formed body is rendered an Ar atmosphere, voltage is applied to generate glow plasma, and in that state the surface of the hot-stamp formed body is sputtered while analyzing it in the depth direction. Further, the elements contained in the material are identified from the emission spectral wavelengths unique to the elements generated by excitation of atoms in the glow plasma and the emission intensities of the identified elements are estimated. Depth direction data can be estimated from the sputter time. Specifically, by using standard samples in advance to find the relationship between the sputter time and the sputter depth, it is possible to convert the sputter time to the sputter depth. Therefore, the sputter depth converted from the sputter time can be defined as the depth from the surface of the material. The obtained emission intensities are converted to mass% by creating calibration curves. When measuring the hot-stamp formed body by GDS in this way, the region in the depth direction where the Zn concentration becomes more than 0.1% is determined as the solid solution layer.

### [Martensite Area Ratio of Steel Base Material: 90% or More]

The steel base material of the hot-stamp formed body according to an embodiment of the present invention comprises, by area ratio, martensite 90% or more. The balance structure is not particularly limited, but may comprise 10% or less of at least one of bainite, ferrite, retained austenite, and pearlite. Martensite is an extremely hard structure, therefore by including martensite in the hot-stamp formed body in an area ratio of 90% or more, high strength, specifically Vickers hardness of 400 HV, can be achieved. On the other hand, if the area ratio of martensite is low and the ratio of ferrite and other soft structures becomes high, sometimes a Vickers hardness of 400 HV cannot be achieved. Therefore, the greater the area ratio of martensite, the more preferable. For example, it may be 92% or more, 94% or more, 96% or more, or 98% or more. The upper limit of the area ratio of martensite is not particularly prescribed and may also be 100%.

### [Identification of Martensite and Calculation of Area Ratio]

The martensite is identified and the area ratio is calculated in the following way. First, a sample is taken so that the cross-section of the hot-stamp formed body parallel to the rolling direction and sheet thickness direction becomes the examined surface. Next, the examined surface is polished to a mirror surface and corroded by a Nital corrosion solution, then is examined for structure using a scan electron microscope (SEM). A 300 µm×300 µm range is captured at 1000X at a sheet thickness 1/4 depth position of the examined surface. The obtained microstructure photograph is binarized to white and black, then the image analyzed to identify the pearlite, bainite, and ferrite. The method based on "Steels - Micrographic determination of the apparent grain size" determined in JIS G 0551: 2020 is used to find the total of the area ratio of these. Retained austenite is difficult to differentiate from martensite by an SEM, therefore X-ray diffraction is used to measure the area ratio of the retained austenite. Finally, the total area ratio of the pearlite, bainite, ferrite, and retained austenite obtained by the above methods is subtracted from 100% to determine the area ratio of martensite.

### [Mechanical Properties]

According to the hot-stamp formed body according to an embodiment of the present invention, excellent mechanical properties, for example, a Vickers hardness of 400 HV or more, more specifically a Vickers hardness of 400 HV or more at the 1/2 position of thickness of the steel base material, can be achieved. The Vickers hardness is preferably 500 HV or more, more preferably 550 HV or more. The upper limit is not particularly prescribed, but, for example, the Vickers hardness may also be 650 HV or less or 600 HV or less.

### [Measurement of Hardness]

The Vickers hardness is determined in the following way. First, a test piece is cut out from any position except the end parts of the hot-stamp formed body to enable a cross-section vertical to the surface (thickness cross-section) to be examined. The sheet thickness cross-section of the test piece is polished using #600 to #1500 silicon carbide paper, then is finished to a mirror surface using a solution of particle size 1 to 6 µm diamond powder dispersed in alcohol or other diluent or pure water and the thickness cross-section is made the measured surface. Next, a micro-Vickers hardness tester is used to measure the Vickers hardness by a load of 1 kgf at intervals of 3 times or more of the indentations. A total of 20 points are randomly measured near the 1/2 position of thickness of the steel base material so as to not include the surface layer part with the low carbon concentration and the arithmetic average of these is determined as the hardness of the hot-stamp formed body.

### [Preferable Chemical Composition of Steel Base Material]

The chemical composition of the steel base material according to an embodiment of the present invention may be any chemical composition generally applied in a hot-stamp formed body and able to give a Vickers hardness of 400 HV or more. Below, a preferable chemical composition of the steel base material will be explained in detail, but the explanation is intended simply as illustration of the preferable chemical composition of a steel base material suitable for achieving a Vickers hardness of 400 HV or more and is not intended to limit the present invention to one using a steel base material having such a specific chemical composition.

In an embodiment of the present invention, for example, the steel base material preferably has a chemical composition comprising, by mass%,
C: 0.13 to 0.50%,
Si: 0.001 to 3.000%,
Mn: 0.30 to 3.00%,
Al: 0.0002 to 2.000%,
P: 0.100% or less,
S: 0.1000% or less,
N: 0.0100% or less,
Nb: 0 to 0.15%,
Ti: 0 to 0.15%,
V: 0 to 0.15%,
Mo: 0 to 1.0%,
Cr: 0 to 1.0%,
Cu: 0 to 1.0%,
Ni: 0 to 1.0%,
B: 0 to 0.0100%,
W: 0 to 1.000%,
Hf: 0 to 0.050%,
Mg: 0 to 0.050%,
Zr: 0 to 0.050%,
Ca: 0 to 0.010%,
REM: 0 to 0.30%,
Ir: 0 to 1.000%, and
bal.: Fe and impurities.

Below, the elements will be explained in more detail.

### [C: 0.13 to 0.50%]

C is an element inexpensively causing the tensile strength to increase and is an element important for the control of the strength of steel. To sufficiently obtain such an effect, the C content is preferably 0.13% or more. The C content may also be 0.15% or more, 0.20% or more, 0.30% or more, or 0.35% or more. On the other hand, if excessively containing C, sometimes a drop in the elongation is invited. For this reason, the C content is preferably 0.50% or less. The C content may also be 0.45% or less or 0.40% or less.

### [Si: 0.001 to 3.000%]

Si is an element acting as a deoxidizer and suppressing precipitation of carbides in the cooling process when annealing the cold rolled sheet. To sufficiently obtain such an effect, the Si content is preferably 0.001% or more. The Si content may also be 0.010% or more, 0.100% or more, or 0.200% or more. On the other hand, if excessively containing Si, along with the increase in steel strength, sometimes a drop in the elongation is invited. For this reason, the Si content is preferably 3.000% or less. The Si content may also be 2.500% or less, 2.000% or less, 1.500% or less, or 1.000% or less.

### [Mn: 0.30 to 3.00%]

Mn is an element raising the hardenability of steel and an element effective for raising the strength. To sufficiently obtain such an effect, the Mn content is preferably 0.30% or more. The Mn content may also be 0.50% or more, 1.00% or more, or 1.30% or more. On the other hand, if excessively containing Mn, along with the increase in steel strength, sometimes a drop in the elongation is invited. For this reason, the Mn content is preferably 3.00% or less. The Mn content may also be 2.80% or less, 2.50% or less, or 2.00% or less.

### [Al: 0.0002 to 2.000%]

Al is an element acting as a deoxidizer of steel and having the action of making the steel sounder. To sufficiently obtain such an effect, the Al content is preferably 0.0002% or more. The Al content may also be 0.001% or more, 0.010% or more, 0.050% or more, or 0.100% or more. On the other hand, if excessively containing Al, coarse Al oxides are formed and sometimes the elongation of the steel material falls. For this reason, the Al content is preferably 2.000% or less. The Al content may also be 1.500% or less, 1.000% or less, 0.800% or less, or 0.500% or less.

### [P: 0.100% or Less]

P is an element segregating at the grain boundaries and promoting embrittlement of the steel. The smaller the P content, the more preferable, so ideally it is 0%. However, excessive reduction of the P content sometimes invites a large increase in costs. For this reason, the P content may be 0.0001% or more and may also be 0.001% or more or 0.005% or more. On the other hand, if excessively containing P, as explained above, sometimes grain boundary segregation causes embrittlement of the steel. Therefore, the P content is preferably 0.100% or less. The P content may also be 0.050% or less, 0.030% or less, or 0.010% or less.

### [S: 0.1000% or Less]

S is an element forming MnS and other nonmetallic inclusions in steel and inviting a drop in the ductility of a steel material part. The smaller the S content, the more preferable, so ideally it is 0%. However, excessive reduction of the S content sometimes invites a large increase in costs. For this reason, the S content may be 0.0001% or more and may also be 0.0002% or more, 0.0010% or more, or 0.0050% or more. On the other hand, if excessively containing S, sometimes cracking is invited starting from the nonmetallic inclusions at the time of cold working. Therefore, the S content is preferably 0.1000% or less. The S content may also be 0.0500% or less, 0.0200% or less, or 0.0100% or less.

### [N: 0.0100% or Less]

N is an element forming coarse nitrides in a steel material and causing a drop in the workability of the steel material. The smaller the N content, the more preferable, so ideally it is 0%. However, excessive reduction of the N content sometimes invites a large increase in production costs. For this reason, the N content may be 0.0001% or more and may also be 0.0005% or more or 0.0010% or more. On the other hand, if excessively containing N, as explained above, coarse nitrides are formed and sometimes the workability of the steel material is lowered. Therefore, the content is preferably 0.0100% or less. The N content may also be 0.0080% or less or 0.0050% or less.

The preferable basic chemical composition of the steel base material is as explained above. Further, the steel base material may, according to need, contain one or more elements selected from the group comprised of Nb: 0 to 0.15%, Ti: 0 to 0.15%, V: 0 to 0.15%, Mo: 0 to 1.0%, Cr: 0 to 1.0%, Cu: 0 to 1.0%, Ni: 0 to 1.0%, B: 0 to 0.0100%, W: 0 to 1.000%, Hf: 0 to 0.050%, Mg: 0 to 0.050%, Zr: 0 to 0.050%, Ca: 0 to 0.010%, REM: 0 to 0.30%, and Ir: 0 to 1.000% in place of part of the balance of Fe. These elements may respectively be contained in 0.0001 % or more, 0.0005% or more, 0.001% or more, or 0.01% or more.

In the steel base material, the balance besides the above elements is comprised of Fe and impurities. The "impurities" in the steel base material are constituents, etc., entering due to the ore, scrap, or other raw materials and other various factors in the production process when industrially producing the steel base material.

The chemical composition of the steel base material may be measured by a general analysis method. For example, the chemical composition of the steel base material may be measured by first removing the plating layer by mechanical polishing, then measuring the chips based on JIS G 1201: 2014 using inductively coupled plasma-atomic emission spectrometry (ICP-AES). Specifically, for example, a 35 mm square test piece is obtained from near the 1/2 position of the thickness of the steel base material and is measured by an ICPS-8100, etc. (measuring device) made by Shimadzu Corporation under conditions based on calibration curves prepared in advance to thereby identify the composition. C and S, which cannot be measured by ICP-AES, can be measured using the combustion-infrared absorption method, N can be measured using the inert gas melting-thermal conductivity method, and O can be measured using the inert gas melting-nondispersive type infrared absorption method.

<Method of Production of Hot-Stamp Formed Body>

Next, a preferable method of production of the hot-stamp formed body according to an embodiment of the present invention will be explained. The following explanation is intended to illustrate the characteristic method for production of the hot-stamp formed body according to an embodiment of the present invention and is not intended to limit the hot-stamp formed body to one produced by the method of production explained below.

The hot-stamp formed body according to an embodiment of the present invention can be produced by, for example, a casting step of casting molten metal adjusted in chemical composition to form a steel slab, a hot rolling step of hot rolling the steel slab to obtain hot rolled steel sheet, a coiling step of coiling the hot rolled steel sheet, a cooling step of cold rolling the coiled up hot rolled steel sheet to obtain cold rolled steel sheet, an annealing step of annealing the cold rolled steel sheet, a cooling step of cooling the annealed cold rolled steel sheet, a plating step of forming a plating layer on the obtained steel base material, and a hot-stamp forming step of hot-stamp forming the obtained plated steel sheet. Alternatively, the steel sheet need not be coiled up after the hot rolling step, but may be pickled and sent on to the cold rolling step as is. Below, the steps will be explained in detail.

### [Casting Step]

The conditions of the casting step are not particularly limited. For example, after smelting by a blast furnace, electric furnace, etc., various secondary refining operations may be performed, then the steel may be cast by the usual continuous casting, casting by the ingot method, or other method.

### [Hot Rolling Step]

The cast steel slab can be hot rolled to obtain hot rolled steel sheet. The hot rolling step is performed by hot rolling the cast steel slab directly or after cooling once, then reheating. If reheating, the heating temperature of the steel slab may, for example, be 1100 to 1250°C. In the hot rolling step, usually rough rolling and finish rolling are performed. The temperatures and rolling reductions of the rolling operations can be suitably determined in accordance with the desired metallostructure and sheet thickness. For example, the end temperature of the finish rolling may be 900 to 1050°C and the rolling reduction of the finish rolling may be 10 to 50%.

### [Coiling Step]

The hot rolled steel sheet can be coiled up at a predetermined temperature. The coiling temperature can be suitably determined in accordance with the desired metallostructure, etc. For example, it may be 500 to 800°C. Before coiling or after coiling, then uncoiling, the hot rolled steel sheet may be subjected to predetermined heat treatment. Alternatively, the coiling step need not be performed, but the steel sheet may be pickled after the hot rolling step and then the later mentioned cold rolling step performed.

### [Cold Rolling Step]

The hot rolled steel sheet may be pickled, etc., then the hot rolled steel sheet may be cold rolled to obtain cold rolled steel sheet. The rolling reduction of the cold rolling can be suitably determined in accordance with the desired metallostructure and sheet thickness. For example, it may be 20 to 80%. After the cold rolling step, for example, the steel sheet may be air cooled to cool it down to room temperature.

### [Annealing Step]

Next, the obtained cold rolled steel sheet is annealed. The annealing step includes heating the cold rolled steel sheet in an atmosphere with a dew point of -20 to 10°C to 730 to 900°C in temperature and holding it there for 10 to 300 seconds. By performing the annealing step under such relatively high dew point conditions, it is possible to suitably decarburize the surface layer part of the cold rolled steel sheet. Due to such decarburization treatment, at the plated steel sheet before hot-stamp forming, the surface layer part of the steel base material can be formed with a region with a relatively small amount of pearlite. More specifically, in the sheet thickness direction from the surface of the steel base material, a depth region with an area ratio of pearlite of 20% or less may be formed to 3 µm or more. By forming a structure with such a relatively small amount of pearlite at the surface layer part of the steel base material, at the finally obtained hot-stamp formed body, it becomes possible to reliably suppress the mean C concentration down to 1 µm in the depth direction from the surface of the steel base material to 0.25 mass% or less. If the dew point is less than-20°C, the heating temperature is less than 730°C, and/or the holding time is less than 10 seconds, the decarburization at the surface layer part of the cold rolled steel sheet becomes insufficient. As a result, the surface layer part of the steel base material can no longer be formed with the above mentioned like region with a relatively small amount of pearlite. On the other hand, if the dew point is more than 10°C, the heating temperature is more than 900°C, and/or the holding time is more than 300 seconds, sometimes the steel sheet surface is formed with an external oxide layer, the plateability falls, and excessive decarburization causes the finally obtained hot-stamp formed body to fall in strength. The dew point is preferably -10 to 5°C, more preferably -5 to 5°C. Further, the atmosphere at the annealing step may be a reducing atmosphere, more specifically a reducing atmosphere containing nitrogen and hydrogen, for example, a hydrogen 1 to 10% reducing atmosphere (for example, hydrogen 4% and nitrogen balance).

### [Cooling Step]

The cold rolled steel sheet with the surface layer part decarburized in the annealing step has to be suitably cooled in the next cooling step in order to obtain the desired surface layer part structure. Specifically, the cooling step includes cooling from the heating temperature of the annealing step to a control temperature of 620 to 670°C by a mean cooling speed of 20°C/s or more (primary cooling) and cooling from the control temperature to the plating bath temperature (for example, melting point of plating bath+20°C) by a mean cooling speed of 10°C/s or less (secondary cooling). Below, the primary cooling and secondary cooling will be explained in more detail.

### [Primary Cooling]

In the primary cooling, it is important to suppress precipitation of pearlite at a high temperature. Explained more specifically, pearlite precipitating at a high temperature of the 730 to 900°C heating temperature at the annealing step to the 620 to 670°C control temperature quickly disperses, therefore pearlite dispersed at the grain boundaries and running along the grain boundaries after precipitation is easily formed. The pearlite formed along the grain boundaries transforms to austenite at the time of high temperature heating in hot-stamp forming, therefore routes for recarburization of carbon are formed by the austenite running along the grain boundaries and recarburization by carbon in the bulk to the steel base material surface layer part is promoted. Therefore, in the temperature region from the heating temperature of the annealing step to the control temperature, it becomes extremely important to suppress precipitation of pearlite at a high temperature at the steel base material surface layer part by cooling the cold rolled steel sheet by a relatively fast mean cooling speed of 20°C/s or more. If the mean cooling speed is less than 20°C/s and/or the control temperature is more than 670°C, pearlite precipitates at the fast dispersion high temperature, therefore formation of pearlite running along the grain boundaries is promoted. In relation to this, at the plated steel sheet before hot-stamp forming, it becomes no longer possible to reduce the amount of coarse pearlite at the steel base material surface layer part, more specifically, a large amount of coarse pearlite having a circle equivalent diameter of 5 µm or more is formed along the grain boundaries at the steel base material surface layer part. If the amount of such coarse pearlite formed along the grain boundaries becomes greater, formation of routes for recarburization of carbon by the austenite running along the grain boundaries is promoted at the time of the high temperature heating in the hot-stamp forming. As a result, at the finally obtained hot-stamp formed body, it becomes no longer possible to suppress the mean C concentration from the surface of the steel base material down to 1 µm in the depth direction to 0.25 mass% or less and becomes no longer possible to achieve a sufficient LME resistance at the time of spot welding.

### [Secondary Cooling]

On the other hand, in the secondary cooling after the primary cooling, making the pearlite precipitate at a low temperature where dispersion is relatively slow is important. More specifically, it is possible to make the pearlite precipitate by cooling from the control temperature of 620 to 670°C to the plating bath temperature (for example, melting point of plating bath+20°C) by a mean cooling speed of 10°C/s or less. Pearlite precipitating at such a control temperature or less low temperature region is relatively slow to disperse, therefore does not form strings along the grain boundaries. The pearlite can remain present dispersed on the grain boundaries. In the case of such a structure, even at the time of the high temperature heating in the hot-stamp forming, the austenite transformed from pearlite at the A_{c1} point or more can similarly be made present dispersed on the grain boundaries, therefore the routes for recarburization of carbon by austenite can be reliably cut off. On the other hand, if the mean cooling speed is more than 10°C/s and/or the control temperature is less than 620°C, not pearlite, but mainly martensite and bainite precipitate. Martensite and bainite are faster in speed of transformation to austenite compared with pearlite and immediately transform to austenite right above the A_{c1} point. For this reason, compared with the case of pearlite, at the time of hot-stamp forming, the time exposed to a high temperature at the dual phase structure of ferrite and austenite becomes longer. In the same way as such a case, routes for recarburization become easily formed at the grain boundaries, therefore sufficient LME resistance can no longer be achieved.

### [Plating Step]

Next, in the plating step, a plating layer is formed at least at one surface and preferably both surfaces of the cold rolled steel sheet (steel base material). More specifically, the plating step is performed by hot dip galvanization using a plating bath having a predetermined chemical composition (plating bath temperature: for example 420 to 480°C). Alloying may be caused after the hot dip galvanization. Further, the plating treatment is not limited to hot dip galvanization and may also be performed by electroplating, vapor deposition plating, thermal spraying, cold spraying, etc. The other conditions of the plating step may be suitably set considering the thickness, amount of deposition, etc., of the plating layer. For example, by dipping the cold rolled steel sheet in a plating bath, then pulling it up and immediately blowing N₂ gas or air for gas wiping, then cooling, it is possible to adjust the amount of deposition of the plating layer to within a predetermined range, for example, to within a range of 30 to 200 g/m² per surface.

### [Cooling After Plating]

When cooling after plating, it is necessary to control the dew point of the cooling gas (for example, nitrogen gas) to within a range of -10 to 10°C. By cooling the plated steel sheet in such a relatively high dew point atmosphere, it is possible to form an Al oxide coating on the surface of the plating layer relatively thickly. Due to the formation of the Al oxide coating, even at the time of the high temperature heating in the hot-stamp forming, it is possible to remarkably suppress or reduce the vaporization of the Zn and/or Mg in the plating layer. As a result, it is possible to reliably include in the plating layer after hot-stamp forming, as a Zn-containing phase, at least one of an η-Zn phase, Fe-Zn-based intermetallic compound phase, and Mg-Zn-based intermetallic compound phase excellent in corrosion resistance. Further, it is possible to relatively reduce the Fe content in the plating layer of the obtained hot-stamp formed body due to the suppression of the Zn and/or Mg in the plating layer, therefore it becomes possible to further improve the corrosion resistance after hot-stamp forming. By controlling the dew point of the cooling gas at the time of cooling after plating to within a range of -10 to 10°C and additionally suitably adjusting the chemical composition of the plating layer, it is possible to make the desired Zn-containing phase be formed in the plating layer. For example, in addition to the above-mentioned dew point control, by making the chemical composition o the plating layer contain, by mass%, Al: 6.0 to 30.0% and Mg: 3.00 to 15.00%, it is possible to form, as the Zn-containing phase in the plating layer, at least one of the η-Zn phase and Fe-Zn-based intermetallic compound phase. Similarly, by making the chemical composition of the plating layer include, by mass% Al: 20.0 to 30.0% and Mg: 5.00 to 15.00%, it is possible to make an Mg-Zn-based intermetallic compound phase be formed in the plating layer as an Zn-containing phase, in particular make only an Mg-Zn-based intermetallic compound phase be formed.

### [Hot-Stamp Forming Step]

Finally, the obtained plated steel sheet is hot stamped in the hot-stamp forming step whereby a hot-stamp formed body having the desired surface layer part composition and hard structure is produced. From the viewpoint of obtaining the desired hard structure, the plated steel sheet is preferably loaded into a 800 to 1000°C furnace and held in the furnace for 60 to 600 seconds after the temperature of the plated steel sheet reaches a predetermined temperature, for example, the internal furnace temperature -10°C. If the heating temperature is less than 800°C and/or the holding time is less than 60 seconds, the austenization becomes insufficient, the desired area ratio of the hard structure (i.e., a martensite area ratio of 90% or more) cannot be obtained, and at the finally obtained hot-stamp formed body, sometimes a Vickers hardness of 400 HV or more cannot be achieved. The heating atmosphere is not particularly limited and may be the usual conditions. For example, it may be the air, a gas combustion atmosphere controlled in ratio of air and fuel, or a nitrogen atmosphere. The dew point may also be controlled in these gases. After being heated and held in the furnace, the plated steel sheet can be taken out from the furnace, then hot stamped until usual conditions after the plated steel sheet reaches a predetermined temperature, for example a 850°C or less predetermined temperature. After the hot-stamp forming, while not particularly limited to this, for example the body may be cooled down to the 250°C or less temperature region by a mean cooling speed of 20°C/s or more.

Below, examples will be used to explain the present invention in more detail, but the present invention is not limited to these examples in any way.

### EXAMPLES

In the following examples, hot-stamp formed bodies according to an embodiment of the present invention were produced under various conditions and the properties of the produced hot-stamp formed bodies produced were investigated.

First, molten steel was cast by the continuous casting method for form a steel slab having each of the chemical compositions shown in Table 1. Each steel slab was cooled once, then reheated to 1200°C and hot rolled, then was coiled up at a 600°C or less temperature. The hot rolling was performed by rough rolling and finish rolling. The end temperature of the finish rolling was 900 to 1050°C and the rolling reduction of the finish rolling was 30%. Next, the obtained hot rolled steel sheet was pickled, then was cold rolled by a rolling reduction of 50% to obtain cold rolled steel sheet having a 1.6 mm sheet thickness. Next, the obtained cold rolled steel sheet was subjected to an annealing step in an oxygen concentration 20 ppm or less furnace in a mixed gas atmosphere of hydrogen 4% and a nitrogen balance under the conditions shown in Table 2, then was similarly subjected to a cooling step under the conditions shown in Table 2 to produce a steel base material.

Next, each produced steel base material was cut to 100 mm×200 mm. A batch type hot dip coating test apparatus made by the inventors' company was used to plate the steel base material. More specifically, first, the produced steel base material was dipped for about 3 seconds in a plating bath having a predetermined chemical composition, then was pulled up by a speed of 20 to 200 mm/s and wiped with N₂ gas to adjust the amount of deposition of the plating layer to the value shown in Table 2. Next, the steel base material with the plating layer attached was cooled from the plating bath temperature (about 420 to 480°C) to room temperature using as the cooling gas a nitrogen gas controlled to the dew point shown in Table 2 whereby a plated steel sheet with a plating layer formed on both surfaces of the steel base material was obtained. The sheet temperature was measured using a thermocouple spot welded to the center part of the steel base material.

### [Analysis of Chemical Composition of Plating Layer]

The chemical composition of the plating layer was determined in the following way. First, the plated steel sheet was loaded into a 900°C atmospheric heating furnace and held there for 100 seconds after the temperature of the plated steel sheet reached the internal furnace temperature-10°C. Next, the plated steel sheet was taken out from the furnace. The plated steel sheet was clamped between a flat plate die set of a temperature of about room temperature to rapidly cool it. After heating and rapid cooling, a sample cut to 30 mm×30 mm was dipped in a room temperature acidic aqueous solution comprised of 10% of hydrochloric acid to which 1% of Hibiron (A-6) (made by Sugimura Chemical Industrial Co., Ltd.) is added. The plating layer was peeled off by pickling, then the plating constituents dissolved in the aqueous solution were measured by ICP spectrometry to determine the composition. The results are shown in Table 2.

### [Evaluation of LME Resistance at Time of Spot Welding]

First, a plated steel sheet was loaded into a 900°C atmospheric heating furnace. After the temperature of the plated steel sheet reached the furnace inside temperature-10°C, the plated steel sheet was held there for 100 seconds. Next, the plated steel sheet was taken out from the furnace. The plated steel sheet was clamped between flat plate dies of a temperature of about room temperature to rapidly cool it. Two 50 mm×100 mm samples of the heated and rapidly cooled plated steel sheet were prepared. These two plated steel sheet samples were spot welded using dome radius type tip diameter 8 mm welding electrodes by a weld angle of 2°, squeeze force of 4.0kN, weld time of 0.5 second, and weld current of 12 kA to prepare a welded joint. Next, the length of an LME crack formed outside the shoulder of the weld zone was measured and the LME resistance was evaluated as follows:
AAA: 0 µm
AA: more than 0 to 20 µm
A: more than 20 µm to less than 80 µm
B: 80 11m or more

### [Evaluation of Corrosion Resistance]

The corrosion resistance after the hot-stamp forming was evaluated in the following way. First, a plated steel sheet was loaded into a 900°C atmospheric heating furnace and held there for 100 seconds after the temperature of the plated steel sheet reaches the internal furnace temperature-10°C. Next, the plated steel sheet was taken out from the furnace and the plated steel sheet was sandwiched between and rapidly cooled by a flat plate die set at a temperature of about room temperature. A 50 mm×100 mm sample of the hot-stamp formed body after heating and rapid cooling was treated by Zn phosphate (SD5350 System: standard made by Nippon Paint Industrial Coatings Co., Ltd.), then was coated by electrodeposition (PN110 Powernics Gray: standard made by Nippon Paint Industrial Coatings Co., Ltd.) to 20 µm. This was baked on at a temperature of 150°C for 20 minutes. Next, a cut was made at the center of the sample reaching the back iron (steel base material). Next, a cyclic corrosion test based on JASO (M609-91) was performed for the number of cycles under red rust formed from the cut part. The corrosion resistance was evaluated in the following way.
AAA: more than 240 cycles
AA: 180 to 240 cycles
A: 90 to less than 180 cycles
B: less than 90 cycles

### [Evaluation of Hardness After Hot Stamping (HS)]

First, in the same way as evaluation of the corrosion resistance, a plated steel sheet was loaded into a 900°C atmospheric heating furnace and held there for 100 seconds after the temperature of the plated steel sheet reached the internal furnace temperature-10°C. Next, the plated steel sheet was taken out from the furnace and the plated steel sheet was sandwiched between and rapidly cooled by a flat plate die set at a temperature of about room temperature to obtain a hot-stamp formed body (HS Condition A). On the other hand, except for loading the plated steel sheet into a 700°C atmospheric heating furnace, the same procedure as in the HS Condition A was followed to obtain the hot-stamp formed body of Comparative Example 41 (HS Condition B). A test piece was cut out from any position of the obtained hot-stamp formed body other than the end parts so that a cross-section vertical to the surface (sheet thickness cross-section) could be examined. The sheet thickness cross-section of the test piece was polished using #600 to #1500 silicon carbide paper, then finished to a mirror surface using a solution of particle size 1 to 6 µm diamond powder dispersed in alcohol or another diluent or pure water and the sheet thickness cross-section was made the measured surface. Next, a micro-Vickers hardness tester was used to measure the Vickers hardness by a load of 1 kgf at intervals of 3 times or more of the indentations. A total of 20 points were randomly measured near the 1/2 position of thickness of the steel base material so as to not include the surface layer part with the low caron concentration and the arithmetic average of these was determined as the hardness after hot stamping (HS). This was evaluated as follows:
AAA: hardness after HS of more than 550 HV
AA: hardness after HS of more than 500 to 550 HV
A: hardness after HS of 400 to 500 HV
B: hardness after HS of less than 400 HV

### [Identification of Zn-Containing Phase]

The Zn-containing phase was identified by the X-ray diffraction method (XRD). Specifically, a Cu tube was used as a source of generation of the X-rays and the surface of the plating layer was measured by XRD. If a peak was present within a range of 2θ=42.9 to 43.6°, it was judged that the Zn-containing phase in the plating layer was an η-Zn phase. Regarding an Fe-Zn-based intermetallic compound phase and Mg-Zn-based intermetallic compound phase, if a peak is present in the range of ±0.3° from the diffraction peaks of the highest intensities in the ICDD card, it was judged that the plating layer of the Zn-containing phase contained an Fe-Zn-based intermetallic compound phase and/or Mg-Zn-based intermetallic compound phase. In Table 2, only any presence of at least one of η-Zn phase and Fe-Zn-based intermetallic compound phase and an Mg-Zn-based intermetallic compound phase was shown, but, for example, in Examples 1 and 13, the presence of an η-Zn phase and δ-FeZn_{1 0} phase and Γ-Fe₃ Zn_{1 0} phase Fe-Zn-based intermetallic compound phases was confirmed and in Examples 2 and 14, the presence of an η-Zn phase and Γ-Fe₃ Zn_{1 0} phase was confirmed. From Examples 5 and 17, an η-Zn phase and MgZn₂ phase were detected. From Examples 9 and 20, MgZn₂ phases were detected. From Examples 12 and 19, an MgZn₂ phase, Mg₂Zn₃ phase, and MgZn phase were detected.

Cases where the hardness after HS was evaluated as AAA, AA, and A, the LME resistance was evaluated as AAA, AA, and A, and the corrosion resistance was evaluated as AAA, AA, and A were evaluated as hot-stamp formed bodies high in strength, maintaining high corrosion resistance even after hot-stamp forming, and suppressing LME cracking at the time of spot welding. The results are shown in Table 2. In the hot-stamp formed bodies shown in Table 2, the balance structures besides martensite were bainite, ferrite, retained austenite, and/or pearlite.

### [Table 1]

**Table 1**

| Steel type | Chemical composition (mass%), balance: Fe and impurities | | | | | | |
|---|---|---|---|---|---|---|---|
| | C | Si | Mn | Al | P | S | N |
| A | 0.20 | 0.012 | 1.23 | 0.030 | 0.005 | 0.0020 | 0.0030 |
| B | 0.30 | 0.220 | 1.70 | 0.030 | 0.005 | 0.0020 | 0.0030 |
| C | 0.40 | 0.200 | 1.30 | 0.030 | 0.005 | 0.0020 | 0.0030 |
| D | 0.50 | 0.200 | 1.30 | 0.030 | 0.005 | 0.0020 | 0.0030 |
| E | 0.12 | 0.200 | 1.70 | 0.030 | 0.005 | 0.0020 | 0.0030 |

### [Table 2-1]

**Table 2-1**

| No. | Class | Steel type | Production conditions | | | | | | | |
|---|---|---|---|---|---|---|---|---|---|---|
| | | | Annealing step | | | Cooling step | | | Cooling gas after plating | HS condition |
| | | | Dew point (°C) | Heating temp. T1 (°C) | Holding time (s) | T1→T2 mean cooling speed (°C/s) | Control temp. T2 (°C) | T2→mean cooling speed of plating bath temp. (°C/s) | Dew point (°C) | |
| 1 | Ex. | A | 0 | 800 | 10 | 20 | 650 | 10 | 0 | A |
| 2 | Ex. | B | 0 | 800 | 15 | 20 | 650 | 10 | 0 | A |
| 3 | Ex. | A | 0 | 800 | 50 | 20 | 650 | 10 | 0 | A |
| 4 | Ex. | A | 0 | 800 | 50 | 30 | 650 | 10 | 0 | A |
| 5 | Ex. | A | 0 | 800 | 50 | 30 | 650 | 10 | 0 | A |
| 6 | Ex. | A | 0 | 800 | 50 | 30 | 650 | 10 | 0 | A |
| 7 | Ex. | B | 0 | 800 | 60 | 30 | 650 | 10 | 0 | A |
| 8 | Ex. | A | 0 | 800 | 60 | 30 | 650 | 10 | 0 | A |
| 9 | Ex. | B | 0 | 800 | 80 | 30 | 650 | 10 | 0 | A |
| 10 | Ex. | C | 0 | 800 | 100 | 30 | 650 | 5 | 0 | A |
| 11 | Ex. | C | 0 | 800 | 100 | 30 | 650 | 5 | 0 | A |
| 12 | Ex. | D | 0 | 800 | 100 | 30 | 650 | 5 | 0 | A |
| 13 | Ex. | A | 0 | 800 | 120 | 30 | 650 | 10 | 0 | A |
| 14 | Ex. | A | 0 | 800 | 120 | 30 | 650 | 10 | 0 | A |
| 15 | Ex. | A | 0 | 800 | 120 | 30 | 650 | 10 | 0 | A |
| 16 | Ex. | A | 0 | 800 | 120 | 30 | 650 | 10 | 0 | A |
| 17 | Ex. | A | 0 | 800 | 120 | 30 | 650 | 10 | 0 | A |
| 18 | Ex. | A | 0 | 800 | 120 | 30 | 650 | 10 | 0 | A |
| 19 | Ex. | A | 0 | 800 | 140 | 30 | 650 | 10 | 0 | A |
| 20 | Ex. | A | 0 | 800 | 140 | 30 | 650 | 10 | 0 | A |
| 21 | Ex. | A | 0 | 800 | 170 | 30 | 650 | 10 | 0 | A |
| 22 | Ex. | B | 0 | 900 | 200 | 30 | 650 | 10 | 0 | A |
| 23 | Ex. | B | 0 | 850 | 220 | 30 | 650 | 10 | 0 | A |
| 24 | Ex. | B | 0 | 800 | 230 | 30 | 650 | 10 | 0 | A |
| 25 | Ex. | B | 0 | 800 | 240 | 30 | 650 | 10 | 0 | A |
| 26 | Ex. | B | 0 | 800 | 250 | 30 | 650 | 10 | 0 | A |
| 27 | Ex. | B | 0 | 730 | 250 | 30 | 650 | 10 | 0 | A |
| 28 | Ex. | C | 0 | 800 | 300 | 30 | 650 | 5 | 0 | A |
| 29 | Ex. | C | 0 | 800 | 300 | 30 | 650 | 5 | 0 | A |
| 30 | Ex. | C | 0 | 800 | 300 | 30 | 650 | 5 | 0 | A |
| 31 | Ex. | D | 0 | 800 | 300 | 30 | 650 | 5 | 0 | A |
| 32 | Ex. | D | 0 | 800 | 300 | 30 | 650 | 5 | 0 | A |
| 33 | Ex. | B | 0 | 800 | 220 | 30 | 620 | 10 | 0 | A |
| 34 | Ex. | B | 0 | 800 | 220 | 30 | 670 | 10 | 0 | A |
| 35 | Ex. | B | 0 | 800 | 220 | 30 | 660 | 10 | -10 | A |
| 36 | Ex. | B | 0 | 800 | 220 | 30 | 650 | 10 | 10 | A |
| 37 | Comp. ex. | E | 0 | 800 | 120 | 20 | 650 | 10 | 0 | A |
| 38 | Comp. ex. | A | 0 | 710 | 100 | 20 | 650 | 10 | 0 | A |
| 39 | Comp. ex. | A | 0 | 800 | 9 | 20 | 650 | 10 | 0 | A |
| 40 | Comp. ex. | A | -30 | 800 | 100 | 20 | 650 | 10 | 0 | A |
| 41 | Comp. ex. | A | 0 | 800 | 100 | 15 | 650 | 10 | 0 | A |
| 42 | Comp. ex. | A | 0 | 800 | 100 | 20 | 700 | 10 | 0 | A |
| 43 | Comp. ex. | A | 0 | 800 | 100 | 20 | 500 | 10 | 0 | A |
| 44 | Comp. ex. | A | 0 | 800 | 100 | 20 | 650 | 13 | 0 | A |
| 45 | Comp. ex. | A | 0 | 800 | 100 | 20 | 650 | 10 | 0 | B |
| 46 | Comp. ex. | A | 0 | 800 | 300 | 30 | 650 | 5 | -14 | A |

### [Table 2-2]

**Table 2-2**

| No. | Class | Cross-sectional structure of steel base material | | | Plating layer | | | | | | | | | | Performance | | |
|---|---|---|---|---|---|---|---|---|---|---|---|---|---|---|---|---|---|
| | | Martensite area ratio (%) | X | X/steel base material C content | Chemical composition (mass%), bal.: Zn and impurities | | | | | | | Am't of deposition (g/m²) | Zn-containing phase | | Hardness after HS | LME resistance | Corrosion resistance |
| | | | Interface to 1 µm mean C conc. (mass%) | | Zn | Al | Mg | Si | Ca | Fe | Others | | At least one of η-Zn and Fe-Zn | Mg-Zn | | | |
| 1 | Ex. | 95 | 0.20 | 1.00 | Bal. | 0.5 | 0.50 | 0 | 0 | 60.0 | | 30 | Yes | | A | A | A |
| 2 | Ex. | 94 | 0.25 | 0.83 | Bal. | 1.5 | 1.50 | 0.2 | 0 | 55.0 | Ni:0.0004 | 81 | Yes | | AA | A | A |
| 3 | Ex. | 91 | 0.21 | 1.05 | Bal. | 1.5 | 2.00 | 0.2 | 0 | 52.0 | Y:0.0002, In:0.001 | 83 | Yes | | A | A | A |
| 4 | Ex. | 93 | 0.11 | 0.55 | Bal. | 3.0 | 2.00 | 0.2 | 0 | 50.1 | Nb:0.001 | 79 | Yes | | A | AA | A |
| 5 | Ex. | 99 | 0.12 | 0.60 | Bal. | 6.0 | 3.00 | 0.2 | 0.1 | 44.5 | Zr:0.001 | 74 | Yes | Yes | A | AA | AA |
| 6 | Ex. | 93 | 0.11 | 0.55 | Bal. | 10.0 | 4.40 | 0.4 | 0.1 | 21.0 | | 88 | Yes | Yes | A | AA | AA |
| 7 | Ex. | 94 | 0.15 | 0.50 | Bal. | 12.4 | 4.60 | 0.6 | 0.2 | 22.5 | - | 87 | Yes | Yes | AA | AA | AA |
| 8 | Ex. | 97 | 0.10 | 0.50 | Bal. | 15.9 | 9.10 | 0.6 | 1.1 | 25.6 | | 87 | Yes | Yes | AA | AA | AA |
| 9 | Ex. | 96 | 0.17 | 0.57 | Bal. | 20.0 | 5.00 | 0.8 | 0.2 | 30.4 | | 99 | | Yes | AA | AA | AAA |
| 10 | Ex. | 98 | 0.17 | 0.43 | Bal. | 24.0 | 7.60 | 0.9 | 0.2 | 40.1 | Cu:0.004, Cr:0.06 | 68 | | Yes | AAA | AA | AAA |
| 11 | Ex. | 96 | 0.17 | 0.43 | Bal. | 25.9 | 8.80 | 0.6 | 1.0 | 33.1 | | 77 | | Yes | AAA | AA | AAA |
| 12 | Ex. | 94 | 0.18 | 0.36 | Bal. | 30.0 | 15.00 | 2.0 | 2.0 | 30.8 | | 160 | | Yes | AAA | AA | AAA |
| 13 | Ex. | 93 | 0.10 | 0.50 | Bal. | 0.5 | 0.50 | 0.2 | 0 | 59.9 | Sb:0.3 | 160 | Yes | | A | AAA | A |
| 14 | Ex. | 96 | 0.08 | 0.40 | Bal. | 1.0 | 1.20 | 0.2 | 0 | 51.9 | Mo:0.001 | 69 | Yes | | A | AAA | A |
| 15 | Ex. | 91 | 0.08 | 0.40 | Bal. | 2.9 | 2.30 | 0.2 | 0.2 | 44.3 | Mn:0.03 | 78 | Yes | | A | AAA | A |
| 16 | Ex. | 90 | 0.08 | 0.40 | Bal. | 6.7 | 3.50 | 0.2 | 0.2 | 29.8 | Ca:0.006 | 77 | Yes | Yes | A | AAA | AA |
| 17 | Ex. | 93 | 0.08 | 0.40 | Bal. | 11.2 | 3.60 | 0.4 | 0.1 | 20.9 | | 74 | Yes | Yes | A | AAA | AA |
| 18 | Ex. | 92 | 0.06 | 0.30 | Bal. | 16.8 | 6.50 | 0.6 | 1.9 | 17.8 | Sn:0.02 | 71 | Yes | Yes | A | AAA | AA |
| 19 | Ex. | 95 | 0.08 | 0.40 | Bal. | 21.1 | 15.00 | 0.8 | 1.0 | 24.1 | Co:0.001 | 64 | | Yes | A | AAA | AAA |
| 20 | Ex. | 96 | 0.07 | 0.35 | Bal. | 29.9 | 5.60 | 2.0 | 0.3 | 30.7 | Ag:0.001 ,Pb: 0.004 | 88 | | Yes | A | AAA | AAA |
| 21 | Ex. | 99 | 0.08 | 0.40 | Bal. | 0.5 | 0.60 | 0.2 | 0 | 59.5 | | 66 | Yes | | A | AAA | A |
| 22 | Ex. | 95 | 0.07 | 0.23 | Bal. | 2.2 | 1.90 | 0.2 | 0 | 49.8 | | 88 | Yes | | AA | AAA | A |
| 23 | Ex. | 95 | 0.07 | 0.23 | Bal. | 4.1 | 3.10 | 0.2 | 0 | 38.4 | Ti:0.008 | 89 | Yes | | AA | AAA | A |
| 24 | Ex. | 93 | 0.08 | 0.27 | Bal. | 8.5 | 8.20 | 0.2 | 0 | 22.4 | | 98 | Yes | Yes | AA | AAA | AA |
| 25 | Ex. | 94 | 0.04 | 0.13 | Bal. | 8.9 | 5.00 | 0.2 | 0 | 21.1 | Bi:0.004, P:0.001 | 77 | Yes | Yes | AA | AAA | AA |
| 26 | Ex. | 92 | 0.07 | 0.23 | Bal. | 9.8 | 6.60 | 0.2 | 0 | 18.9 | | 80 | Yes | Yes | AA | AAA | AA |
| 27 | Ex. | 92 | 0.08 | 0.27 | Bal. | 11.8 | 3.50 | 0.7 | 0.2 | 15.0 | B:0.009 | 71 | Yes | Yes | AA | AAA | AA |
| 28 | Ex. | 94 | 0.08 | 0.20 | Bal. | 18.5 | 4.60 | 0.8 | 0.3 | 19.9 | Sr:0.01 | 89 | Yes | Yes | AAA | AAA | AA |
| 29 | Ex. | 93 | 0.07 | 0.18 | Bal. | 25.1 | 6.60 | 1.1 | 0.9 | 24.1 | | 88 | | Yes | AAA | AAA | AAA |
| 30 | Ex. | 97 | 0.08 | 0.20 | Bal. | 20.9 | 7.80 | 1.2 | 0 | 20.1 | Ce:0.005 | 81 | | Yes | AAA | AAA | AAA |
| 31 | Ex. | 98 | 0.06 | 0.12 | Bal. | 28.9 | 8.90 | 1.7 | 0.1 | 27.5 | Li:0.01 | 80 | | Yes | AAA | AAA | AAA |
| 32 | Ex. | 92 | 0.07 | 0.14 | Bal. | 30.0 | 7.90 | 2.0 | 0.2 | 27.8 | La:0.003, W:0.002 | 68 | | Yes | AAA | AAA | AAA |
| 33 | Ex. | 95 | 0.07 | 0.23 | Bal. | 4.0 | 3.10 | 0 | 0 | 40.9 | | 89 | Yes | | AA | AAA | A |
| 34 | Ex. | 91 | 0.07 | 0.23 | Bal. | 4.1 | 3.00 | 0 | 0 | 38.4 | | 88 | Yes | | AA | AAA | A |
| 35 | Ex. | 92 | 0.08 | 0.27 | Bal. | 2.0 | 2.00 | 0 | 0 | 38.4 | | 88 | Yes | | AA | AAA | A |
| 36 | Ex. | 93 | 0.07 | 0.23 | Bal. | 1.5 | 1.00 | 0 | 0 | 38.4 | | 88 | Yes | | AA | AAA | A |
| 37 | Comp. ex. | 96 | 0.06 | 0.50 | Bal. | 1.0 | 1.50 | 0 | 0 | 55.0 | | 64 | Yes | | B | AAA | A |
| 38 | Comp. ex. | 99 | 0.28 | 1.40 | Bal. | 5.0 | 2.00 | 0.2 | 0 | 45.0 | | 65 | Yes | | A | B | A |
| 39 | Comp. ex. | 91 | 0.26 | 1.55 | Bal. | 5.0 | 2.00 | 0.2 | 0 | 57.0 | | 65 | Yes | | A | B | A |
| 40 | Comp. ex. | 90 | 0.55 | 2.75 | Bal. | 5.0 | 2.00 | 0.2 | 0 | 58.0 | | 65 | Yes | | A | B | A |
| 41 | Comp. ex. | 91 | 0.34 | 1.70 | Bal. | 5.0 | 2.00 | 0.2 | 0 | 54.0 | | 65 | Yes | | A | B | A |
| 42 | Comp. ex. | 95 | 0.39 | 1.95 | Bal. | 5.0 | 2.00 | 0.2 | 0 | 56.0 | | 65 | Yes | | A | B | A |
| 43 | Comp. ex. | 96 | 0.31 | 1.55 | Bal. | 5.0 | 2.00 | 0.2 | 0 | 43.0 | | 65 | Yes | | A | B | A |
| 44 | Comp. ex. | 97 | 0.34 | 1.70 | Bal. | 5.0 | 2.00 | 0.2 | 0 | 53.0 | | 65 | Yes | | A | B | A |
| 45 | Comp. ex. | 50 | 0.21 | 1.05 | Bal. | 5.0 | 2.00 | 0.2 | 0 | 53.0 | | 65 | Yes | | B | A | A |
| 46 | Comp. ex. | 91 | 0.06 | 0.15 | Bal. | 44.5 | 1.10 | 2.0 | 0.2 | 45.1 | | 66 | | | AAA | AAA | B |

Referring to Table 2, in Comparative Example 37, the LME resistance and corrosion resistance were excellent, but the hardness after HS was low and therefore the desired high strength could not be achieved. In Comparative Example 38, the heating temperature of the annealing step was low, therefore probably the decarburization at the surface layer part of the cold rolled steel sheet was insufficient. As a result, the mean C concentration down to 1 µm in the depth direction from the surface of the steel base material became higher and the LME resistance fell. In Comparative Example 39, the holding time in the annealing step was short, therefore similarly probably the decarburization at the surface layer part of the cold rolled steel sheet was insufficient. As a result, the mean C concentration down to 1 µm in the depth direction from the surface of the steel base material became higher and the LME resistance fell. In Comparative Example 40, the dew point of the annealing step was low, therefore similarly probably the decarburization at the surface layer part of the cold rolled steel sheet was insufficient. As a result, the mean C concentration down to 1 µm in the depth direction from the surface of the steel base material became higher and the LME resistance fell. When examining by an SEM the cross-section of the plated steel sheet before hot-stamp forming according to each of Comparative Examples 38 to 40, the depth region in the sheet thickness direction from the surface of the steel base material where the area ratio of pearlite became 20% or less was in each case less than 3 µm. In Comparative Example 41, the mean cooling speed of the primary cooling in the cooling step was low, therefore pearlite precipitated at a high temperature and formed along the grain boundaries probably resulting in promotion of recarburization at the time of the high temperature heating in the hot-stamp forming. As a result, the mean C concentration from the surface of the steel base material down to 1 µm in the depth direction became higher and the LME resistance fell. In Comparative Example 42, the control temperature of the primary cooling in the cooling step was high, therefore similarly pearlite precipitated at a high temperature and formed along the grain boundaries probably resulting in promotion of recarburization at the time of the high temperature heating in the hot-stamp forming. As a result, the mean C concentration down to 1 µm in the depth direction from the surface of the steel base material became higher and the LME resistance fell. When examining by an SEM the cross-section of the plated steel sheet before hot-stamp forming according to each of Comparative Examples 41 and 42, a relatively large amount of coarse pearlite having a circle equivalent diameter of 5 µm or more was formed at the steel base material surface layer part. In Comparative Example 43, the control temperature of the secondary cooling in the cooling step was low, therefore not pearlite, but bainite mainly precipitated and recarburization was probably promoted at the time of the high temperature heating in the hot-stamp forming. As a result, the mean C concentration down to 1 µm in the depth direction from the surface of the steel base material became higher and the LME resistance fell. In Comparative Example 44, the mean cooling speed of the secondary cooling in the cooling step was fast, therefore similarly not pearlite, but bainite mainly precipitated and recarburization was probably promoted at the time of the high temperature heating in the hot-stamp forming. As a result, the mean C concentration down to 1 µm in the depth direction from the surface of the steel base material became higher and the LME resistance fell. In Comparative Example 45, the hot stamping conditions were not suitable, therefore the austenization became insufficient, the desired martensite area ratio could not be achieved, and the hardness after HS fell. In Comparative Example 46, the amount of deposition of the plating layer was 30 g/m² or more per surface, but the dew point of the cooling gas after plating was low, so probably the Al oxide coating could not be sufficiently formed at the surface of the plating layer. As a result, it was not possible to sufficiently suppress or reduce the vaporization of the Zn and/or Mg in the plating layer, further in relation to this, it was not possible to make a specific Zn-containing phase in the plating layer, and the corrosion resistance of the HS fell.

As opposed to this, in each of the hot-stamp formed bodies according to all of the examples, by having the predetermined plating chemical composition, having an amount of deposition of the plating layer containing a specific Zn-containing phase of 30 g/m² or more per surface, and controlling the mean C concentration down to 1 µm in the depth direction from the surface of the steel base material to 0.25 mass% or less, even when used for hot-stamp forming, it was possible to maintain a high strength and high corrosion resistance while sufficiently obtaining the effect of suppression of LME by the initial lowering of the carbon concentration of the steel base material surface layer part and reliably suppressing or reducing the occurrence of LME cracking at the time of subsequent spot welding. When examining by an SEM the cross-section of the plated steel sheet before hot-stamp forming according to all of the examples, the depth region in the sheet thickness direction from the surface of the steel base material where the area ratio of pearlite became 20% or less was in each case 3 µm or more. Further, the ratio of coarse pearlite having a circle equivalent diameter of 5 µm or more at the steel base material surface layer part was sufficiently lower compared with Comparative Examples 41 and 42. In particular, in each of Examples 5 to 8, 16 to 18, and 24 to 28 with Al and Mg contents in the plating layer of respectively 6.0 mass% or more and 3.00 mass% or more, the Zn-containing phase in the plating layer contained at least one of an η-Zn phase and Fe-Zn-based intermetallic compound and as a result the corrosion resistance was evaluated as AA. Compared with Example 1, etc., with an evaluation of corrosion resistance A, the corrosion resistance could be further improved in corrosion resistance. Similarly, in Examples 9 to 12, 19, 20, and 29 to 32 with Al and Mg contents in the plating layer of respectively 20,0 mass% or more and 5.00 mass% or more, the Zn-containing phase in the plating layer contained an Mg-Zn-based intermetallic compound phase, in particular, only an Mg-Zn-based intermetallic compound phase, and as a result the corrosion resistance was evaluated as AAA and the corrosion resistance was improved more. Further, in the hot-stamp formed bodies, when measured by GDS, the presence of a solid solution layer containing an Fe-Al solid solution layer, Fe-Zn solid solution layer, and/or Fe-Al-Zn solid solution layer was confirmed in the hot-stamp formed bodies of all of the examples.

## Claims

1. A hot-stamp formed body comprising a steel base material and a plating layer arranged on a surface of the steel base material, wherein
the plating layer has a chemical composition comprising, by mass%,
Al: 0.5 to 30.0%,
Mg: 0.50 to 15.00%,
Si: 0 to 2.0%, and
Fe: 15.0 to 70.0%,
further comprising at least one of
Ni: 0 to 1.000%,
Ca: 0 to 3.0%,
Sb: 0 to 0.500%,
Pb: 0 to 0.500%,
Cu: 0 to 1.000%,
Sn: 0 to 1.000%,
Ti: 0 to 1.000%,
Cr: 0 to 1.000%,
Nb: 0 to 1.000%,
Zr: 0 to 1.000%,
Mn: 0 to 1.000%,
Mo: 0 to 1.000%,
Ag: 0 to 1.000%,
Li: 0 to 1.000%,
La: 0 to 0.500%,
Ce: 0 to 0.500%,
B: 0 to 0.500%,
Y: 0 to 0.500%,
Sr: 0 to 0.500%,
In: 0 to 0.500%,
Co: 0 to 0.500%,
Bi: 0 to 0.500%,
P: 0 to 0.500%, and
W: 0 to 0.500% in a total of 5.000% or less, and
a balance: Zn and impurities,
a mean C concentration down to 1 µm in a depth direction from a surface of the steel base material is 0.25 mass% or less,
the steel base material comprises, by area ratio, martensite in 90% or more,
an amount of deposition of the plating layer is 30 g/m² or more per surface,
the plating layer includes a Zn-containing phase containing at least one of an η-Zn phase, Fe-Zn-based intermetallic compound phase, and Mg-Zn-based intermetallic compound phase, and
the Vickers hardness is 400 HV or more.

2. The hot-stamp formed body according to claim 1, wherein the mean C concentration is 0.18 mass% or less.

3. The hot-stamp formed body according to claim 2, wherein the mean C concentration is 0.10 mass% or less.

4. The hot-stamp formed body according to any one of claims 1 to 3, wherein the chemical composition contains, by mass%, Al: 6.0 to30.0% and Mg: 3.00 to15.00% and the Zn-containing phase includes at least one of an η-Zn phase and Fe-Zn-based intermetallic compound phase.

5. The hot-stamp formed body according to any one of claims 1 to 3, wherein the chemical composition contains, by mass%, Al: 20.0 to30.0% and Mg: 5.00 to15.00% and the Zn-containing phase includes an Mg-Zn-based intermetallic compound phase.
